# EUROPÄISCHE PATENTSCHRIFT

(11) **EP 2 874 925 B1**
(45) Veröffentlichungstag und Bekanntmachung des Hinweises auf die Patenterteilung: **14.10.2015**
(21) Anmeldenummer: 14718911.2
(22) Anmeldetag: 27.03.2014
(51) Int. Cl.: B65G 59/02, B65G 59/04, B65G 61/00

(54) **GREIFERKOPF ZUM TRANSPORT VON STÜCKGUTGEBINDEN**
GRIPPER HEAD FOR TRANSPORTING PARCELLED GOODS PACKAGES
TÊTE DE GRAPPIN POUR TRANSPORTER DES RECIPIENTS POUR MARCHANDISE DE DÉTAIL

(30) Priorität: 04.04.2013 DE 102013005613
(43) Veröffentlichungstag der Anmeldung: 27.05.2015
(73) Patentinhaber: Atlantic C Handels- und Beratungs GmbH, 54470 Bernkastel-Kues (DE)
(72) Erfinder: GÄNZ, Rolf, 54470 Bernkastel-Kues (DE)
(74) Vertreter: Tergau, Dietrich
(86) Internationale Anmeldenummer: PCT/EP2014/000827
(87) Internationale Veröffentlichungsnummer: WO 2014/161646

(56) Entgegenhaltungen:
- EP-A1- 1 321 397
- DE-A1- 4 427 488
- DE-A1-102007 054 867
- GB-A- 2 231 020

## Beschreibung

Die vorliegende Erfindung betrifft einen Greiferkopf zum Transport von Stückgutgebinden von Stapeln oder aus Regalfächern oder dergleichen nach dem Oberbegriff des Anspruchs 1.

Aus dem Stand der Technik sind sogenannte Sauggreifer bekannt, welche sich mit Unterdruck an die Deckfläche des Stückgutgebindes ansaugen und das Gebinde mit Unterdruck halten. Derartige Sauggreifer funktionieren in der Regel nur bei Stückgütern mit durchgehenden Deckflächen, nicht jedoch bei Trays oder Laden oder ähnlich offenen Ladehilfsmitteln.

Weiterhin sind sogenannte Aufwälzgreifer bekannt. Diese Aufwälzgreifer weisen mehrere, in der Regel gabelartige Vorsprünge auf, mit welchen sie das Stückgutgebinde teilweise unterfahren. Mit Hilfe von auf den Vorsprüngen angebrachten Bandförderern wird das Stückgut auf die Vorsprünge soweit gefördert bis die Vorsprünge das Stückgut mechanisch sicher untergreifen. Nachteilig hierbei ist die Tatsache, dass ein Aufwälzgreifer stets einen Gegenanschlag benötigt, weil er andernfalls das aufzuladende Stückgut vor sich herschieben würde mit der Folge, dass die Vorsprünge das Stückgut nicht untergreifen können. Der Aufwälzgreifer benötigt einen gewissen Anpressdruck, um durch Rollreibung ein Stückgut heben und aufladen zu können.

Aus der DE-A-10 2007 054 867 ist ein weiterer Sauggreifer mit einem Greiferkopf nach dem Oberbegriff des Anspruchs 1 bekannt, bei welchem das Gebinde zunächst von einer Ansaugvorrichtung angesaugt und zunächst aus seiner Standposition heraus schräg gestellt wird und anschließend von mechanischen Tragelementen unterfahren wird. Ähnliche Konstruktionen zeigen die GB-A-2 231 020 und die DE-A-44 27 488.

Ausgehend hiervon liegt der Erfindung die Aufgabe zugrunde, einen Greiferkopf zum Transport von Stückgutgebinden anzugeben, welcher hinsichtlich des Angriffs seiner Saugeinrichtungen am Stückgutgebinde verbessert ist. Zur Lösung der Aufgabe ist ein Greiferkopf nach Anspruch 1 vorgeschlagen, welcher zunächst einen Ansaugstutzen und längsverfahrbares Tragelement aufweist, wobei der Ansaugstutzen und das Tragelement etwa rechtwinkelig zueinander angeordnet sind. In der Verladestellung des Greiferkopfs erstreckt sich die Ansaugöffnung des Ansaugstutzens in einer vertikalen Ebene. Das Tragelement erstreckt sich folglich in einer horizontalen Ebene in dieser Verladestellung. Weiterhin weist der Greiferkopf eine Schwenkeinrichtung auf. Mit Hilfe dieser Schwenkeinrichtung kann der Greiferkopf das Gebinde aus seiner Verladestellung in eine Greifstellung schräg stellen. In dieser Schrägstellung sind sowohl die Ansaugöffnung aus ihrer vertikalen Ebene als auch das Tragelement aus seiner horizontalen Ebene herausverschwenkt um einen Betrag von vorzugsweise 5° - 25°.

Neben dem Ansaugstutzen ist noch ein oder sind noch mehrere Saugrüssel am Greiferkopf vorgesehen. Derartige Saugrüssel können an einer Randseite des Greiferkopfs angebracht sein, um das Stückgutgebinde zu flankieren in dem neben der vom Ansaugstutzen beaufschlagten Gebindeseitenwand noch eine weitere Gebindeseitenwand mit Unterdruck beaufschlagt wird. Auch ist es möglich, einen Saugrüssel am Greiferkopf verschiebbar anzuordnen. In diesem Zusammenhang ist es besonders vorteilhaft, einen Saugrüssel nach Art einer doppelseitig wirkenden Saugleiste auszugestalten. Dieser doppelseitig wirkende Saugrüssel kann dann entlang dem Greiferkopf so verschoben werden, dass er gemeinsam mit der Hauptsaugleiste des Greiferkopf an jeweils einer der Seiten des Gebindes angreift.

In einer Weiterbildung der Erfindung ist der Ansaugstutzen als Schwenkeinrichtung am Greiferkopf wirksam. Der Ansaugstutzen ist hierfür schwenkbar. Die Schwenkbarkeit des Ansaugstutzens kann entweder durch einen in sich flexiblen Ansaugstutzen realisiert sein. Der Ansaugstutzen kann durch kombinierte Hebel- und Federelemente in sich derartig flexibel sein, dass er das Stückgutgebinde soweit schräg stellen kann, dass das Tragelement das Stückgutgebinde unterfahren kann.

Ein weitere Variante besteht in einem schwenkbar am Greiferkopf gelagerten Ansaugstutzen. Der Ansaugstutzen kann das bereits angesaugte Stückgutgebinde gegenüber dem Greiferkopf so schräg stellen, dass das Tragelement das Stückgutgebinde einfach unterfahren kann.

Alternativ zu einem verschwenkbaren Ansaugstutzen wird ein am Greiferkopf vertikal verfahrbarer Ansaugstutzen vorgeschlagen. Der Ansaugstutzen saugt so das Stückgutgebinde an und bewirkt durch ein vertikales Verfahren in Hubrichtung wiederum die Schrägstellung des Stückgutgebindes zum Unterfahren mit dem Tragelement.

In weiterer alternativer Ausführung ist es auch möglich den Greiferkopf insgesamt schwenkbar zu lagern, um so die Schrägstellung des Stückgutgebindes zu realisieren.

Auch ist es denkbar, Mischformen der vorstehend aufgezählten Ausgestaltungsmöglichkeiten der Schwenkeinrichtung zu realisieren. Mit Hilfe dieses Greiferkopfs ist es möglich, den Greiferkopf zunächst in seiner Verladestellung an das Stückgutgebinde heranzufahren. In der Verladestellung liegt der Ansaugstutzen mit seiner in der vertikalen Ebene verlaufenden Ansaugöffnung an einer Gebindeseitenwand an und saugt so das Gebinde mit dem vom Ansaugstutzen ausgeübten Unterdruck an. Durch das Anheben und gleichzeitige Verschwenken des Greiferkopfs wird das Gebinde an seiner dem Greiferkopf zugewandten Seite angehoben und steht mit seiner dem Greiferkopf abgewandten Kante weiterhin auf seiner Standfläche auf. Zwischen der Standfläche und dem Gebindeboden wird so ein Freiraum geschaffen, in welchen das längsverfahrbar am Greiferkopf angebrachte Tragelement einfahren kann. Das Gebinde kann dabei auch ein Stück in Richtung auf den Greiferkopf herausgezogen werden. Dieses Tragelement ist vorzugsweise von zwei oder mehreren gabelartigen Vorsprüngen oder von einem durchgehenden Tablar gebildet. Sobald das Tragelement vollständig in Längsrichtung ausgefahren ist und auf diese Weise den Gebindeboden ganz oder zum größten Teil untergreift, wird der schräg gestellte Greiferkopf aus seiner Greifstellung wieder in seine Verladestellung zurückgefahren, in welcher die Ebene der Ansaugöffnung der Ansaugstutzens vertikal und das Tragelement im wesentlichen horizontal verläuft. Der Ausfahrweg des Tragelements in Längsrichtung und der Anstellwinkel des Greiferkopfs sind in vorteilhafter Ausgestaltung programmgesteuert auf die entsprechende Gebindelänge abgestimmt. Auf dem Tragelement aufliegend wird das so aus einem Regal oder von einem Stapel beispielsweise auf einer Palette "gepickte" Stückgutgebinde an seinen Zielort verfahren. Hierbei kann der Ansaugstutzen eine Doppelfunktion entfalten, nämlich als Hubhilfe in der Greifstellung des Greiferkopfs einerseits und als Ladungssicherung für das Stückgutgebinde in der Verladestellung andererseits. Bei letzterer ist das Stückgutgebinde während des Verladevorgangs zusätzlich zum Tragelement vom Unterdruck des Ansaugstutzens gehalten.

Für die Vorrichtung ist es vorteilhaft ein Positionserkennungssystem zu verwenden. Dieses Positionserkennungssystem dient dazu, die exakte Position des Gebindes zu ermitteln und diese Position mit der Greifstellung des Greiferkopfs zu synchronisieren.

Es ist auch eine Ausgestaltung des Greiferkopfs denkbar mit einem starren Tragelement und mit einem auf dem Tragelement hin und her verfahrbaren Greiferkopf bzw. einem teleskopartig ausfahrbaren Saugrüssel. In dieser Ausführungsform wird zum Ansaugen der Gebinde der Greiferkopf bzw. der Saugrüssel an die Vorderkante des Tragelements verfahren, um so den Saugkontakt mit dem Stückgutgebinde herzustellen. Nach dem Anheben und gleichzeitigem Verschwenken des Greiferkopfs wird das Gebinde durch eine Rückfahrbewegung des Greiferkopfs oder des Saugrüsselteleskops dann gleichsam auf das Tragelement gezogen. Anschließend werden Greiferkopf und Tragelement aus der Greifstellung wieder in die Verladestellung zurückverfahren. In vorteilhafter Ausgestaltung erstreckt sich eine Saugleiste über die gesamte Breite des Greiferkopfs als Ansaugstutzen. Eine derartige Saugleiste bietet eine entsprechend große, sich über das gesamte Stückgutgebinde erstreckende Ansaugfläche und kann entsprechend eine hohe Ansaugkraft ausüben. Derartige Saugleisten bestehen in der Regel aus einer Vielzahl nebeneinander angeordneter Ansaugöffnungen. Diese Ansaugöffnungen können mit Rückschlagventilen, Blenden oder vergleichbaren Einrichtungen geöffnet und geschlossen werden. Dieses Öffnen und Schließen kann auch selbsttätig erfolgen. Auf diese Weise ist sichergestellt, dass diejenigen Öffnungen in der Saugleiste aktiviert sind, welche die Seitenwand des Gebindes überdecken. Es ist so wirksam verhindert, dass vom Gebinde nicht überdeckte Öffnungen größere Mengen Raumluft ansaugen.

Das Tragelement kann gabelartig ausgestaltet sein. Hierbei bilden die längsverfahrbaren Vorsprünge gleichsam die Zinken einer Gabel.

In weiterer Ausgestaltung ist es auch möglich, ein durchgehendes Tablar als Tragvorrichtung vorzusehen. Ein solches Tablar hat den Vorteil besonders hohe Kräfte und damit Lasten tragen zu können.

Anhand des nachfolgend geschilderten Ausführungsbeispiels ist die Erfindung weiter beschrieben. Es zeigen:
- Fig. 1: eine Seitenansicht eines an ein Stückgutgebinde herangefahrenen Greiferkopfs in der Verladestellung beim Ansaugen der Gebindeseitenwand,
- Fig. 2: das Ansaugen und Schrägstellen des Gebindes in die Greifstellung inklusive Anheben der Saugleiste,
- Fig. 3: das Unterfahren des Gebindes in der Greifstellung mit dem Tragelement,
- Fig. 4: den mit dem Gebinde beladenen, von der Greifstellung in die Verladestellung zurückverfahrenen Greiferkopf ,
- Fig. 5: eine Draufsicht auf einen Greiferkopf mit einem zusätzlich zum Ansaugstutzen vorgesehenen Saugrüssel sowie

- Fig. 6: eine schematische Darstellung eines am Greiferkopf vertikal verfahrbaren Ansaugstutzens zur Schrägstellung des Stückgutgebindes in drei Funktionsstellungen.

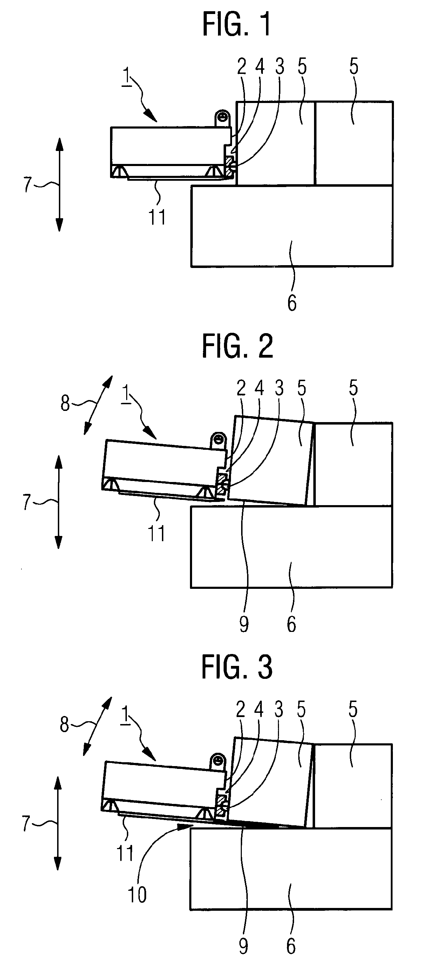

Der Greiferkopf 1 weist an seiner Vorderseite 2 einen Ansaugstutzen 3 auf. In seiner in Fig. 1 dargestellten Verladestellung fährt der Greiferkopf 1 mit dem Ansaugstutzen 3 an eine Gebindeseitenwand 4 eines Stückgebindes 5 heran. Das Stückgutgebinde 5 steht dabei im Ausführungsbeispiel auf einer teilweise dargestellten Palette 6. In Fig. 2 ist gezeigt, dass der Greiferkopf 1 in Hubrichtung 7 angehoben und in Schwenkrichtung 8 aus der in Fig. 1 dargestellten Verladestellung in die Fig. 2 dargestellte Greifstellung verschwenkt ist. Aufgrund dieses Verschwenkens in die Greifstellung und durch eine kleine Hubbewegung des Ansaugstutzens 3 in Hubrichtung 7 relativ zum Greiferkopf 1 ist das vom Ansaugstutzen 3 angesaugte Stückgutgebinde 5 auf der dem Greiferkopf 1 zugewandten Seite soweit angehoben, dass zwischen der Palette 6 und dem Gebindeboden 9 ein Freiraum 10 freigelassen ist. In den Freiraum 10 verfährt das beim Ausführungsbeispiel als Tablar ausgestaltete längsverschiebliche Tragelement 11. Das Tragelement 11 untergreift dabei den Gebindeboden 9 zumindest überwiegend. Nach dem Zurückschwenken des Tragelements 11 gegen die Schwenkrichtung 8 in die horizontale Lage befinden sich sowohl der Gebindeboden 9 als auch das Tragelement 11 wieder in einer horizontalen Ebene, jedoch in Hubrichtung 7 abgehoben von der Palette 6. Von dem vom Ansaugstutzen 3 ausgeübten Unterdruck und von den Reibkräften des Tragelements 11 gehalten kann das Stückgutgebinde 5 dann an seinen Zielort verfahren werden.

Vergleicht man die Darstellungen in der Fig. 1 und Fig. 2 erkennt man, dass der Ansaugstutzen 3 in Fig. 1 an die Unterkante des Greiferkopfs 1 und gleichsam an das Tragelement 11 angrenzt, während in Fig. 2 der Ansaugstutzen 3 in Hubrichtung 7 gegenüber der Unterkante des Greiferkopfs 1 und des Tragelements 11 nach oben verfahren ist. Diese vertikale Verfahrbarkeit des Ansaugstutzens 3 am Greiferkopf 1 dient zum Ausgleich des Höhenunterschieds zwischen der Unterkante des Stückgutgebindes 5 einerseits und des Tragelements 11 andererseits.

Am Zielort wird das Tragelement 11 so über eine Ablagefläche positioniert, dass das Trageelement 11 zusammen mit dem Stückgutgebinde 5 auf dem Träger am Zielort nahezu aufliegt. Sodann werden der Unterdruck am Ansaugstutzen 3 abgeschaltet und das Tragelement 11 zurückgezogen. Sobald das Tragelement 11 sich vollständig zurückgezogen hat, ist der Entladevorgang beendet.

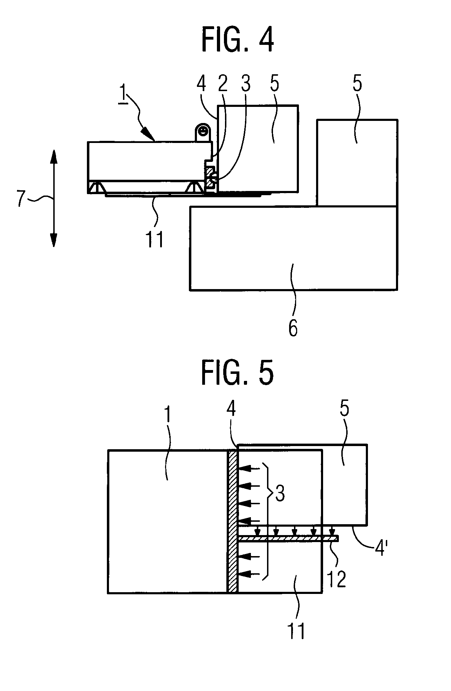

Fig. 5 ist zu entnehmen, dass neben einem am Greiferkopf 1 ausgebildeten leistenartigen Ansaugstutzen 3 mit mehreren beispielsweise mit Rückschlagventilen verschließbaren Ansaugöffnungen am Greiferkopf 1 noch ein zusätzlicher Saugrüssel 12 ausgebildet ist. Der Saugrüssel 12 beaufschlagt das in Fig. 5 dargestellte, in Längsrichtung auf das Tragelement 11 aufgestellte Stückgutgebinde 5 zusätzlich an seiner Gebindeseitenwand 4'. Dies bedeutet, dass das Stückgutgebinde 5 nicht nur mit Unterdruck von den Ansaugstutzen 3 an seiner Gebindeseitenwand 4, welche dem Greiferkopf 1 zugewandt ist, gehalten ist. Zusätzlich wird eine weitere Gebindeseitenwand 4' vom Saugrüssel 12 mit Unterdruck beaufschlagt.

Der Saugrüssel 12 im Ausführungsbeispiel weißt auf beiden Seiten Ansaugöffnungen auf, wobei nur die dem Stückgutgebinde 5 zugewandten Ansaugöffnungen aktiviert sind. So ist es möglich, beide Seiten der Stückgutgebinde 5 mit dem Saugrüssel 12 zusätzlichem Unterdruck zu beaufschlagen. Wird der Saugrüssel 12 nicht benötigt kann er nach oben weggeschwenkt werden.

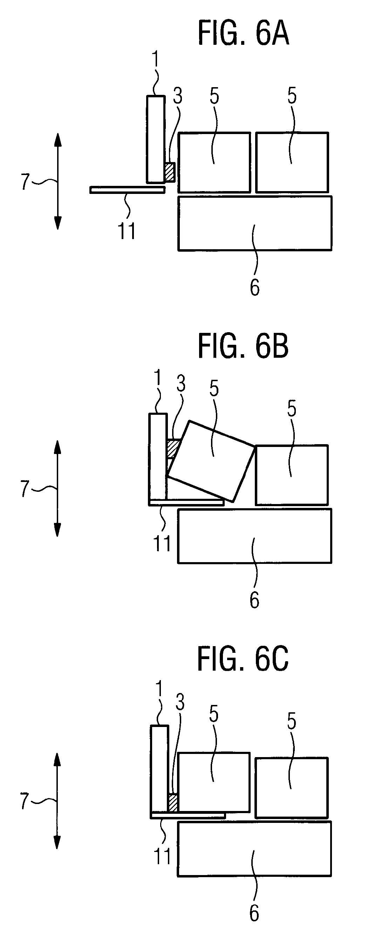

In Fig. 6a ist schematisch der Greiferkopf 1, das Tragelement 11 und das Stückgutgebinde 5 dargestellt. Am Greiferkopf 1 ist der vertikal in Hubrichtung 7 verfahrbare Ansaugstutzen 3 fixiert. In Fig. 6a wird der Greiferkopf 1 an das Stückgutgebinde 5 so herangefahren, dass sich der Ansaugstutzen 3 an der ihm zugewandten Seitenwand des Stückgutgebindes 5 festsaugen kann.

In Fig. 6b verfährt der Ansaugstutzen 3 entlang dem Greiferkopf 1 in Hubrichtung 7 nach oben, so dass das Stückgutgebinde 5 gegenüber seiner in Fig. 6a gezeigten Ausgangsposition schräg gestellt ist. Aufgrund dieser Schrägstellung kann das Tragelement 11 das Stückgutgebinde 5 unterfahren. Sobald das Stückgutgebinde 5 vom Tragelement 11 vollständig unterfahren ist, wird der Ansaugstutzen 3 am Greiferkopf 1 in Hubrichtung 7 wieder in seine Ausgangsstellung zurückverfahren, so dass das Stückgutgebinde 5 wie in Fig. 6c gezeigt auf dem Tragelement 11 aufliegt und zusätzlich vom Ansaugstutzen 3 gehalten ist. Aus der Anschauung der Fig. 6a, 6b und 6c ist erkennbar, dass derselbe Effekt wie in Fig. 6b mit dem in Hubrichtung 7 verfahrbaren Ansaugstutzen 3 dadurch erreicht werden kann, dass der gesamte Greiferkopf 1 gegenüber dem Stückgutgebinde 5 verkippt wird wie dies in Fig. 2 dargestellt ist oder aber der Ansaug-stutzen 3 relativ gegenüber dem Greiferkopf 1 schwenkbar ausgestaltet ist.

### Bezugszeichenliste

- 1: Greiferkopf
- 2: Vorderseite
- 3: Ansaugstutzen
- 4, 4': Gebindeseitenwand
- 5: Stückgutgebinde
- 6: Palette
- 7: Hubrichtung
- 8: Schwenkrichtung
- 9: Gebindeboden
- 10: Freiraum
- 11: Tragelement
- 12: Saugrüssel

## Patentansprüche

1. Greiferkopf (1) zum Transport von Stückgutgebinden (5) mit einem Ansaugstutzen (3) umfassend eine in einer Verladestellung des Greiferkopfs (1) in einer vertikalen Ebene verlaufende Ansaugöffnung zum Saugangriff an einer Gebindeseitenwand (4), mit mindestens einem in einer Verladestellung des Greiferkopfs (1) in einer horizontalen Ebene längsverfahrbaren Tragelement (11) zum Unterfahren des Gebindebodens (9) und mit einer Einrichtung zur Schrägstellung des Stückgutgebindes (5) aus seiner Verladestellung in eine Greifstellung
**gekennzeichnet durch**
einen zusätzlich zum Ansaugstutzen (3) in Richtung auf das Stückgutgebinde (5) ausschwenkbaren Saugrüssel (12), welcher über die Breite des Greiferkopfs (1) quer verfahrbahr ist.

2. Greiferkopf (1) nach Anspruch 1,
**dadurch gekennzeichnet,**
**dass** der Ansaugstutzen (3) schwenkbar ist zur Schrägstellung des Stückgutgebindes (5).

3. Greiferkopf (1) nach Anspruch 2,
**dadurch gekennzeichnet,**
**dass** der Ansaugstutzen (3) am Greiferkopf (1) in Hubrichtung (7) vertikal verfahrbar gelagert ist.

4. Greiferkopf (1) nach Anspruch 1,
**dadurch gekennzeichnet,**
**dass** der Greiferkopf (1) zu seiner Schrägstellung schwenkbar gelagert ist.

5. Greiferkopf (1) nach einem der Ansprüche1 bis 4
**gekennzeichnet durch** eine sich über die gesamte Breite des Greiferkopfs (1) erstreckende Saugleiste als Ansaugstutzen (3).

6. Greiferkopf nach einem der Ansprüche 1 bis 5,
**dadurch gekennzeichnet,**
**dass** der Saugrüssel (12) winkelverstellbar ist.

## Claims

1. A gripper head (1) for transporting parcelled goods packages (5), having an intake socket (3), comprising a suction opening extending in a vertical plane in a loading position of the gripper head (1) for sucking up a side wall (4) of the package, having at least one carrier element (11), which, in a loading position of the gripper head (1), is longitudinally displaceable in a horizontal plane, for moving underneath the bottom (9) of the package, and having a device for tilting the package (5) out of its loading position into a gripping position,
**characterized by**
a suction pipe (12) which can be swiveled out, in addition to the intake socket (3),
in the direction of the parcelled goods package (5) and which can be displaced transversely over the width of the gripper head (1).

2. The gripper head (1) of claim 1,
**characterized in that**
the intake socket (3) can be swiveled in order to tilt the parcelled goods package (5).

3. The gripper head (1) of claim 2,
**characterized in that**
the intake socket (3) on the gripper head (1) is mounted so as to be vertically displaceable in the lifting direction (7).

4. The gripper head (1) of claim 1,
**characterized in that**
the gripper head (1) is mounted so as to be swivelable, for being tilted.

5. The gripper head (1) of any of claims 1 to 4,
**characterized by**
a suction strip, as an intake socket (3), extending over the entire width of the gripper head (1).

6. The gripper head of any of claims 1 to 5,
**characterized in that**
the suction pipe (12) is angularly adjustable.

## Revendications

1. Tête de grappin (1) pour transporter des récipients (5) pour marchandise de détail, ayant une tubulure d'aspiration (3), comprenant une ouverture d'aspiration s'étendant dans un plan vertical dans une position de chargement de la tête de grappin (1) pour aspirer une paroi latérale (4) du récipient, ayant au moins un élément porteur (11) qui, dans une position de chargement de la tête de grappin (1), est déplaçable longitudinalement dans un plan horizontal, pour se placer sous la face inférieure (9) du récipient, et ayant un dispositif pour incliner le récipient (5) à partir de sa position de chargement dans une position de prise,
**caractérisée par**
un tuyau d'aspiration (12) qui peut être pivoté, en plus de la tubulure d'aspiration (3), en direction du récipient (5) pour marchandise de détail et qui peut être déplacé transversement sur la largeur de la tête de grappin (1).

2. Tête de grappin (1) selon la revendication 1,
**caractérisée en ce que**
la tubulure d'aspiration (3) peut être pivotée afin d'incliner le récipient (5) pour marchandise de détail.

3. Tête de grappin (1) selon la revendication 2,
**caractérisée en ce que**
la tubulure d'aspiration (3) sur la tête de grappin (1) est montée à ce qu'elle soit déplaçable verticalement en direction de levage (7).

4. Tête de grappin (1) selon la revendication 1,
**caractérisée en ce que**
la tête de grappin (1) est montée à ce qu'elle soit pivotable, pour être inclinée.

5. Tête de grappin (1) selon l'une quelconque des revendications 1 à 4,
**caractérisée par**
une barre d'aspiration, en tant que tubulure d'aspiration (3), s'étendant sur la largeur entière de la tête de grappin (1).

6. Tête de grappin selon l'une quelconque des revendications 1 à 5,
**caractérisée en ce que**
le tuyau d'aspiration (12) est réglable angulairement.
